# EUROPÄISCHE PATENTSCHRIFT

(11) **EP 2 187 707 B1**
(45) Veröffentlichungstag und Bekanntmachung des Hinweises auf die Patenterteilung: **12.10.2011**
(21) Anmeldenummer: 09175528.0
(22) Anmeldetag: 10.11.2009
(51) Int. Cl.: H05B 33/08

(54) **Schaltungsanordnung zur Ansteuerung von organischen Leuchtdioden**
Switching device for controlling organic LEDs
Agencement de commutation pour la commande de diodes luminescentes organiques

(30) Priorität: 12.11.2008 DE 102008056867
(43) Veröffentlichungstag der Anmeldung: 19.05.2010
(73) Patentinhaber: Hella KGaA Hueck & Co., 59552 Lippstadt (DE)
(72) Erfinder: Berthold, Hans Gerd, 33102 Paderborn (DE); Himmler, Andreas, 33102 Paderborn (DE); Jestel, Dieter, 44579 Castrop-Rauxel (DE); Kornek, Alexander, 59558 Lippstadt (DE); Rodenkirchen, Florian, 33611 Bielefeld (DE); Ruths, Torsten, 59557 Lippstadt (DE)

(56) Entgegenhaltungen:
- EP-A- 1 191 512
- EP-A- 1 942 705
- US-A- 5 723 950
- US-A1- 2005 068 275

## Beschreibung

Die Erfindung betrifft eine Schaltungsanordnung zur Ansteuerung von organischen Leuchtdioden in einem Kraftfahrzeug. Zur Ansteuerung von Leuchtdioden sind Schaltungsanordnungen bekannt, die einen Eingang zum Anschluss an ein Gleichspannungsnetz, z.B. ein Kraftfahrzeugbordnetz, aufweisen. Zum Anschluss der organischen Leuchtdioden weist eine solche Anordnung einen Ausgang auf. Ferner weist die Anordnung eine geregelte Stromquelle auf, die einerseits über den Eingang mit dem Gleichspannungsnetz verbunden werden kann und die andererseits im Betrieb der Schaltungsanordnung den durch den Ausgang fließenden Strom liefert.

Mit einer solchen Schaltungsanordnung können die an die Schaltungsanordnung angeschlossenen organischen Leuchtdioden mit elektrischer Energie versorgt werden. Dadurch werden sie zum Leuchten angeregt. Die Leuchtdichte der Leuchtdioden hängt linear von dem Strom durch die organischen Leuchtdioden ab. Um die Leuchtdichte der organischen Leuchtdioden zu erhöhen, muss also der Strom erhöht werden, und um die Leuchtdichte der Leuchtdioden zu vermindern, muss der Strom reduziert werden, der durch die organischen Leuchtdioden fließt. Durch ein Einstellen der geregelten Stromquelle kann somit die Leuchtdichte eingestellt werden.

Organische Leuchtdioden haben typische Eigenschaften, die Probleme für das Ansteuern mit sich bringen.

Neben der Leuchtdichte hängt auch die Farbe des von den organischen Leuchtdioden ausgestrahlten Lichtes von der Stärke des durch die organischen Leuchtdioden fließenden Stromes ab. Insbesondere bei kleinen Strömen ändert sich die Farbe einer weißen organischen Leuchtdiode. Es findet eine Verschiebung der Farbe zum Rot statt.

In dem Dokument EP 1 942 705 A1 wird nun vorgeschlagen, durch in Reihe zum Ausgang liegende Schaltelemente den durch den Ausgang fließenden Strom ein- und auszuschalten und den an der geregelten Stromquelle eingestellten Strom konstant zu halten. Durch eine Änderung der Schaltfrequenz des Ein- und Ausschaltens durch die in Reihe zum Ausgang liegenden Schaltelemente lässt sich nach dem Dokument EP 1 942 705 A1 die mittlere Stromstärke ändern, da es zum Beginn eines durch das Einschalten und Ausschalten hervorgerufenen Pulses stets zu einer von der Frequenz unabhängigen kurzzeitigen Stromspitze kommt, die bei niedrigeren Frequenzen seltener auftritt als bei hohen Frequenzen. Durch die größere Häufigkeit dieser Stromspitzen wird bei der Schaltungsanordnung gemäß der genannten Druckschrift bei höherer Frequenz eine höhere mittlere Stromstärke erreicht.

Außerdem haben organische Leuchtdioden eine parasitäre Kapazität, die maßgeblich von der Fläche der organischen Leuchtdiode abhängig ist. Eine flächig ausgebildete organische Leuchtdiode, wie sie zur Beleuchtung gerne verwendet wird, kann daher eine erhebliche Kapazität haben. Ein typischer Wert für die auf die Fläche bezogene Kapazität einer organischen Leuchtdiodenfläche ist C/A = 30 nF/cm². Bei einer Fläche von z.B. A = 25 cm² beträgt die Kapazität der flächig ausgebildeten organischen Leuchtdiode C = 750 nF. Die im Vergleich zu herkömmlichen Halbleiter-Leuchtdioden große Kapazität der organischen Leuchtdioden führt bei einem Einschalten des Stromes durch die Leuchtdioden zu einem langsamen Anstieg des Stromes, der für die Erzeugung des Lichtes zur Verfügung steht. Der langsame Anstieg des Stromes zieht eine anfängliche Rotverschiebung des emittierten Lichtes der Leuchtdiode nach sich.

Der Anstieg des Stroms zu Beginn eines Pulses kann beschleunigt werden, wenn man, wie in dem Dokument US 2005/0068275 A1 offenbart, durch eine Rückführung des Ausgangs der geregelten Stromquelle über einen Kondensator zu einem Eingang der geregelten Stromquelle dafür Sorge trägt, dass zum Beginn eines Pulses eine höhere Spannung zum Betreiben des Stroms in die organische Leuchtdiode zur Verfügung gestellt wird, als während des übrigen Pulses. Damit wird ein Aufladen von parasitären Kapazitäten der organischen Leuchtdiode beschleunigt.

Ein weiteres Problem ist, dass die organische Schicht einer organischen Leuchtdiode ionische Verunreinigungen aufweisen kann. Die ionischen Verunreinigungen können während der Lebensdauer sichtbare Störungen des Erscheinungsbildes der organischen Leuchtdiode verursachen. Diese können z.B. als nicht leuchtende schwarze Flecken auftreten. Dieses Problem kann gelöst werden, in dem man kurzzeitig nach einem Ausschalten der organischen Leuchtdioden eine negative Spannung an die organischen Leuchtdioden anlegt. Dieses ist bei der Schaltungsanordnung gemäß dem Dokument EP 1 942 705 A1 vorgesehen.

Vor dem Hintergrund der vorgenannten Probleme war einem Fachmann die Aufgabe gestellt, eine Schaltungsanordnung der eingangs genannten Art so zu verbessern, dass eine organische Leuchtdiode zur Erzeugung von weißem Licht mit einstellbarer Leuchtdichte angesteuert werden kann, ohne dass es zu Rotverschiebungen kommt und ohne dass während der Lebensdauer Störungen aufgrund von ionischen Verunreinigungen auftreten.

Diese Aufgabe wird durch eine Schaltungsanordnung mit den Merkmalen des Anspruchs 1 gelöst. Erfindungsgemäße Anordnungen weisen zumindest ein gesteuertes Schaltelement zum Ein- und Ausschalten des Stromes durch den Ausgang auf, mit welchem der mittlere, durch den Ausgang fließende Strom einstellbar ist. Damit kann der mittlere Strom durch die an den Ausgang angeschlossenen organischen Leuchtdioden eingestellt werden. Der Strom, der durch den Ausgang fließt, kann eine konstante Stromstärke haben. Durch das Ein- und Ausschalten des Stromes kann ohne

Änderung der momentanen Stromstärke die mittlere Stromstärke eingestellt werden. Der Strom durch den Ausgang wird durch das Ein- und Ausschalten mittels des gesteuerten Schaltelementes moduliert. Zur Modulation des Stromes ist eine Puls-Weiten-Modulation (PWM) gewählt. Über das Puls-Pausen-Verhältnis wird die mittlere Stromstärke vorgegeben. Damit kann die mittlere Leuchtdichte der organischen Leuchtdioden eingestellt werden, die an den Ausgang der erfindungsgemäßen Schaltungsanordnung angeschlossen sind.

Durch die Versorgung der an die erfindungsgemäße Schaltungsanordnung angeschlossenen organischen Leuchtdioden mit dem modulierten Strom mit konstanter Stromstärke ist zwar theoretisch das Einstellen von unterschiedlichen Leuchtdichten möglich, ohne dass es zu einer Rotverschiebung kommt. Praktisch bereitet aber die große Kapazität der organischen Leuchtdioden ein Problem. Zu Beginn eines jeden Pulses führt das langsame Ansteigen des Stromes, der für die Erzeugung des Lichtes zur Verfügung steht, zu einer Rotverschiebung zum Beginn eines jeden Pulses.

Abhilfe bringt das RC-Glied, welches geeignet und eingerichtet ist bei geöffnetem ersten Schaltelement, d.h. während einer Pause, von der Stromquelle aufgeladen zu werden und welches ferner geeignet und eingerichtet ist, bei geschlossenem erstem Schaltelement über den Ausgang entladen zu werden. Zum Beginn eines jeden Pulses wird das RC-Glied über die organische Leuchtdiode entladen. Dieser zusätzliche Strom ist idealerweise in der Lage den Ladestrom für die Kapazität der organischen Leuchtdiode zu liefern. Zur Erzeugung des Lichtes steht damit der vollständige, während des Pulses von der geregelten Stromquelle gelieferte Strom zur Verfügung. Unmittelbar zum Beginn eines Pulses wird die konstante, von der geregelten Stromquelle vorgegebene Stromstärke erreicht. Eine Rotverschiebung des Lichtes findet im Idealfall nicht statt.

Eine erfindungsgemäße Schaltungsanordnung weist ferner eine Brückenschaltung auf. Der Ausgang der Schaltungsanordnung liegt in dem Brückenzweig der Brückenschaltung. Die Schaltungsanordnung mit der Brückenschaltung weist zweite gesteuerte Schaltelemente auf, die eine Spannung ein- und ausschalten können, die in Sperrrichtung an organischen Leuchtdioden anliegt, die an den Ausgang der Schaltungsanordnung angeschlossen sind. Mittels einer solchen negativen Spannung an den organischen Leuchtdioden ist es möglich, die sichtbaren Störungen im Erscheinungsbild der organischen Leuchtdioden aufgrund der ionischen Verunreinigungen zu unterdrücken. Die negative Spannung kann beispielsweise -2 V betragen.

Neben dem Brückenzweig weist die Brückenschaltung vier weitere Zweige auf.

In einem ersten Zweig der Brückenschaltung kann eines der ersten gesteuerten Schaltelemente vorgesehen sein. Dieser erste Zweig kann einen ersten Anschluss des Ausgangs mit der geregelten Stromquelle verbinden.

Ein zweiter Zweig der Brückenschaltung kann eine Reihenschaltung eines der zweiten gesteuerten Schaltelemente und eines ohmschen Widerstandselements aufweisen. Der zweite Zweig kann einen zweiten Anschluss des Ausgangs mit der geregelten Stromquelle verbinden.

Ein dritter Zweig der Brückenschaltung kann eine Reihenschaltung eines der zweiten gesteuerten Schaltelemente und eines ohmschen Widerstandselements aufweisen. Der dritte Zweig verbindet den ersten Anschluss des Ausganges mit der Masse.

Schließlich kann ein vierter Zweig der Brückenschaltung eine Parallelschaltung eines der ersten gesteuerten Schaltelemente und eines ohmschen Widerstandselements aufweisen. Der zweite Anschluss des Ausgangs kann über den vierten Zweig mit der Masse verbunden sein.

Die erfindungsgemäße Schaltungsanordnung kann einen Aufladezweig aufweisen, der das RC-Glied mit der geregelten Stromquelle verbindet. Ein gesteuertes Schaltelement und eine erste Diode können in dem Aufladezweig vorgesehen sein. Die Diode ist dabei von der geregelten Stromquelle über das RC-Glied zur Masse in Flussrichtung geschaltet. Der Aufladezweig kann mit dem zweiten Zweig der Brückenschaltung zusammenfallen. So kann insbesondere der Aufladezweig in einem Abschnitt mit dem zweiten gesteuerten Schaltelement mit dem Abschnitt des zweiten Zweigs zusammenfallen, der das genannte zweite gesteuerte Schaltelement umfasst.

Neben dem Aufladezweig kann die erfindungsgemäße Schaltungsanordnung auch einen Entladezweig aufweisen. Der Entladezweig kann das RC-Glied mit der Verbindung bzw. Knoten zwischen der geregelten Stromquelle und dem ersten Zweig der Brückenschaltung verbinden. In dem Entladezweig kann eine zweite Diode vorgesehen sein. Diese zweite Diode ist vom RC-Glied zu der Verbindung bzw. dem Knoten zwischen der geregelten Stromquelle und dem ersten Zweig der Brückenschaltung in Flussrichtung geschaltet.

Zur Steuerung der ersten gesteuerten Schaltelemente und der zweiten gesteuerten Schaltelemente weist die Schaltungsanordnung ein Steuerungsmittel auf. Mit dem Steuerungsmittel wird das Ein- und Ausschalten der ersten und zweiten gesteuerten Schaltelemente gesteuert. Die ersten gesteuerten Schaltelemente und die zweiten gesteuerten Schaltelemente werden von dem Steuerungsmittel im Wechsel eingeschaltet bzw. ausgeschaltet.

Anhand der beigefügten Zeichnungen wird die Erfindung nachfolgend näher erläutert. Dabei zeigt:
- Fig. 1: ein schematisches Schaltbild eines ersten Ausführungsbeispiels für eine Schaltungsanordnung zur Ansteuerung von organischen Leuchtdioden,
- Fig. 2: ein schematisches Schaltbild eines zweiten Ausführungsbeispiels für eine Schaltungsanordnung zur Ansteuerung von organischen Leuchtdioden mit einem RC-Glied,
- Fig. 3: ein schematisches Schaltbild eines dritten Ausführungsbeispiels für eine Schaltungsanordnung zur Ansteuerung von organischen Leuchtdioden mit einer Brückenschaltung,
- Fig. 4: ein schematisches Schaltbild eines vierten, erfindungsgemäßen Ausfüh- rungsbeispiels für eine Schaltungsanordnung mit einem RC-Glied und ei- ner Brückenschaltung,
- Fig. 5: ein Strom-Zeit-Diagramm zur Darstellung der durch die organische Leuchtdiode während des Einschaltens zum Beginn eines Pulses bei allen

- Fig. 6: vorgenannten Ausführungsbeispielen fließenden Ströme, ein Strom-Zeit-Diagramm zur Darstellung der durch eine Ersatzleuchtdiode während des Einschaltens zum Beginn eines Pulses bei allen vier vorge- nannten Ausführungsbeispielen fließenden Ströme,
- Fig. 7: ein Strom-Zeit-Diagramm zur Darstellung der durch einen Ersatzkonden- sator während des Einschaltens zum Beginn eines Pulses bei allen vier vorgenannten Ausführungsbeispielen fließenden Ströme,
- Fig. 8: ein Strom-Zeit-Diagramm zur Darstellung der durch die organische Leuchtdiode während des Ausschaltens zum Beginn einer Pause bei allen vier vorgenannten Ausführungsbeispielen fließenden Ströme,
- Fig. 9: ein Strom-Zeit-Diagramm zur Darstellung der durch eine Ersatzleuchtdiode während des Ausschaltens zum Beginn einer Pause bei allen vier vorge- nannten Ausführungsbeispielen fließenden Ströme und
- Fig. 10: ein Strom-Zeit-Diagramm zur Darstellung der durch einen Ersatzkonden- sator während des Ausschaltens zum Beginn einer Pause bei allen vier vorgenannten Ausführungsbeispielen fließenden Ströme.

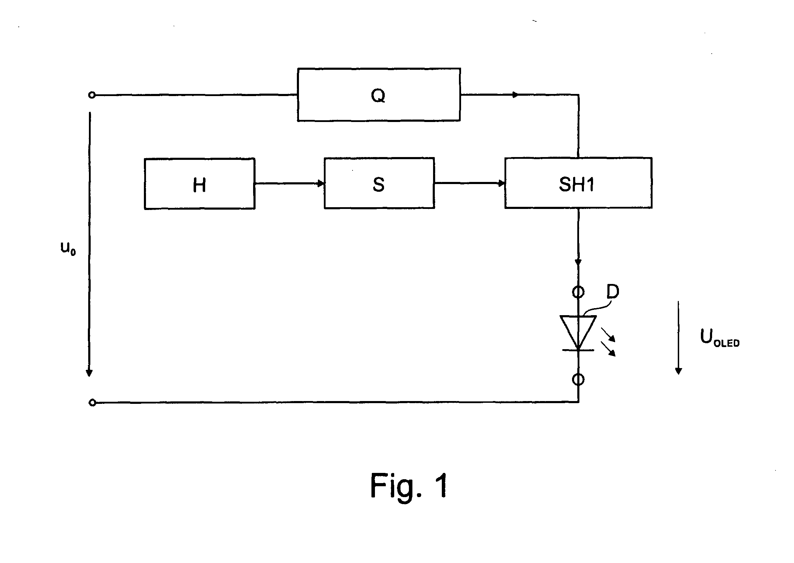

In den Figuren 1 bis 4 zu den ersten bis vierten Ausführungsbeispielen sind erfindungsgemäße Schaltungsanordnungen dargestellt. Die erfindungsgemäßen Schaltungsanordnungen weisen je einen Eingang auf, an dem eine Eingangsspannung U₀ anliegt. An je einem Ausgang der Schaltungsanordnungen liegt jeweils die Spannung U_{OLED} an. An dem Ausgang ist jeweils eine organische Leuchtdiode D angeschlossen.

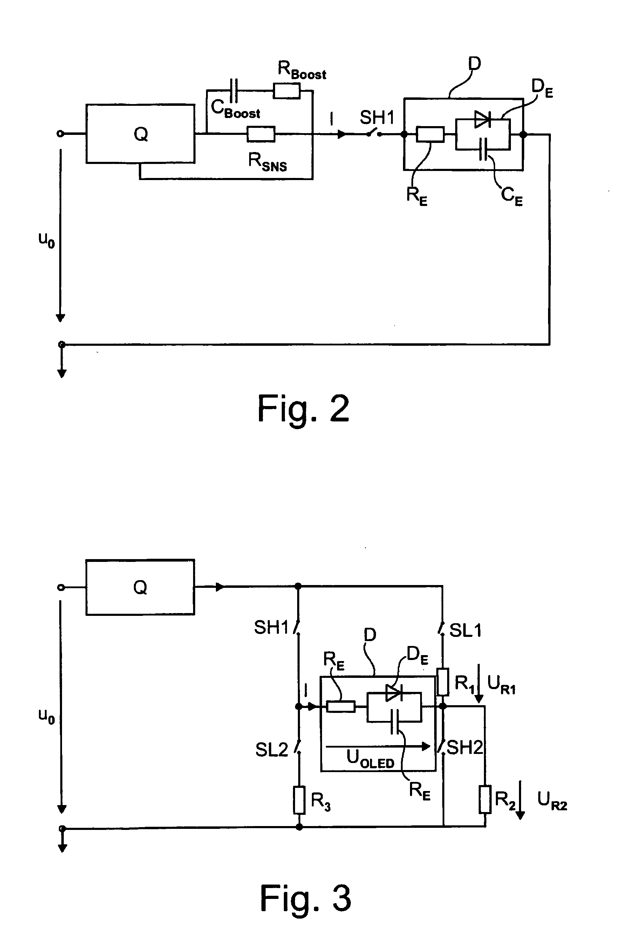

In den Figuren 2, 3 und 4 ist anstelle eines Symbols für die organische Leuchtdiode D ein Ersatzschaltbild für eine organische Leuchtdiode dargestellt. Das Ersatzschaltbild stellt die elektrischen Eigenschaften der organischen Leuchtdiode D dar. Die elektrischen Eigenschaften werden durch die Symbole für ideale Bauelemente dargestellt. Eine ideale Ersatzdiode D_{E} steht für das Diodenverhalten der organischen Leuchtdiode D. Parallel zu dieser idealen Diode ist ein Ersatzkondensator C_{E} für die Kapazität der organischen Leuchtdiode D dargestellt. In Reihe zu der Parallelschaltung aus der Ersatzdiode D_{E} und dem Ersatzkondensator C_{E} ist ein Ersatzwiderstand R_{E} dargestellt. Der Ersatzwiderstand R_{E} steht für den Widerstand der organischen Leuchtdiode D in Flussrichtung.

Über den Ausgang der Schaltungsanordnungen fließt ein Strom I, der von einer geregelten Stromquelle Q bereitgestellt wird. Die geregelte Stromquelle Q ist an einem Anschluss des Eingangs der Schaltungsanordnung angeschlossen.

Zwischen der geregelten Stromquelle Q und dem Ausgang ist zumindest ein erstes Schaltelement SH1 vorgesehen. Bei dem ersten Schaltelement S 1 handelt es sich um ein gesteuertes Schaltelement, welches über ein Steuerungsmittel S von einer Helligkeitssteuerung H angesteuert wird. Mittels des gesteuerten Schaltelementes SH1 und dem Steuerungsmittel S kann der Strom über den Ausgang der Schaltungsanordnung nach Vorgabe der Helligkeitssteuerung H eingestellt werden. Die Helligkeitssteuerung H gibt eine mittlere Stromstärke vor, die während eines vorgegebenen Zeitintervalls durch den Ausgang fließen soll. Der vorgegebenen mittleren Stromstärke entspricht eine mittelere Leuchtdichte der organischen Leuchtdiode D. Das Steuerungsmittel S setzt die Vorgabe der mittleren Stromstärke um, in dem es das erste Schaltelement SH1 zum Schließen und Öffnen, d.h. zum Ein- und Ausschalten ansteuert. Dadurch wird der durch den Ausgang fließende Strom moduliert. Aus dem Puls-Pause-Verhältnis ergibt sich die mittlere Stromstärke des über den Ausgang fließenden Stroms.

In den Figuren 2 bis 4 sind die Helligkeitssteuerung H und das Steuerungsmittel S nicht dargestellt. Die Ausführungsbeispiele weisen diese Bauteile jedoch ebenso auf wie das erste Ausführungsbeispiel gemäß Figur 1.

Das Ausführungsbeispiel gemäß der Figur 2 weist ein RC-Glied auf, dass in den Pausen, d.h. wenn das erste Schaltelement SH1 geöffnet ist, von der geregelten Stromquelle Q aufgeladen wird. Während des Pulses, d.h. wenn das erste Schaltelement SH1 geschlossen ist, wird das RC-Glied entladen und bewirkt einen zusätzlichen Strom durch den Ausgang und somit durch die an den Ausgang angeschlossene organische Leuchtdiode D. Das dargestellte RC-Glied ist aus einer Parallelschaltung eines ohmschen Widerstandselements R_{SNS} zu einer Reihenschaltung eines Kondensators C_{Boost} und eines ohmschen Widerstandselements R_{Boost} zusammengesetzt.

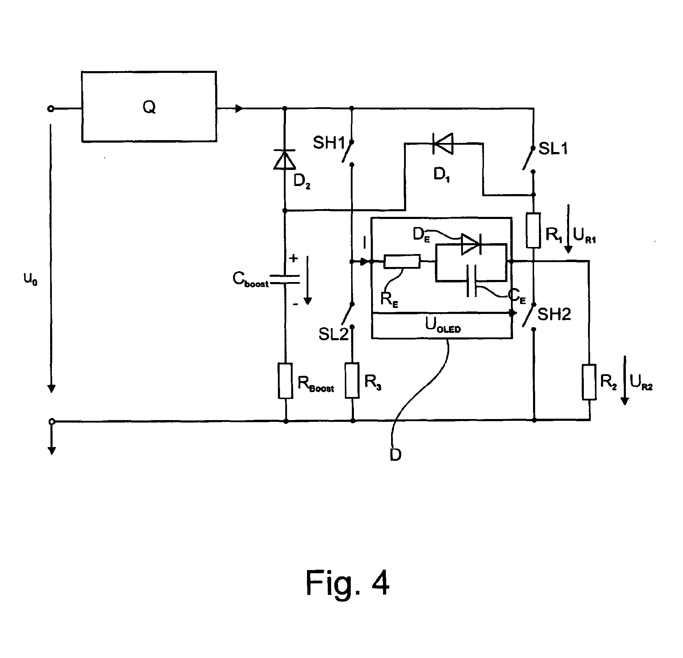

Bei den Ausführungsbeispielen gemäß der Figuren 3 und 4 muss ein weiteres erstes gesteuertes Schaltelement, nämlich das erste gesteuerte Schaltelement mit dem Bezugszeichen SH2 gleichzeitig zu dem bereits genannten ersten gesteuerten Schaltelement SH1 geöffnet und geschlossen werden, um den Fluss des modulierten Stroms durch den Ausgang zu ermöglichen.

Das Ausführungsbeispiel gemäß der Figur 3 weist eine Brückenschaltung auf. Die Brückenschaltung ist an den Ausgang der geregelten Stromquelle Q und an den Masseanschluss des Eingangs angeschlossen. Im Brückenzweig der Brückenschaltung ist der Ausgang des dritten Ausführungsbeispiels vorgesehen, an den die organische Leuchtdiode D angeschlossen ist.

In einem ersten Zweig der Brückenschaltung, der den Ausgang der geregelten Stromquelle Q mit einem ersten Anschluss des Ausgangs verbindet, ist das erste gesteuerte Schaltelement SH1 vorgesehen. Ein zweiter Zweig der Brückenschaltung verbindet den Ausgang der geregelten Stromquelle Q mit dem zweiten Anschluss des Ausgangs. Der zweite Zweig umfasst eine Reihenschaltung aus einem zweiten gesteuerten Schaltelement SL1 und einem ersten ohmschen Widerstandselement R1.

Ein dritter Zweig der Brückenschaltung verbindet den ersten Anschluss des Ausgangs mit dem Masseanschluss des Eingangs der Schaltungsanordnung. In dem dritten Zweig ist eine Reihenschaltung aus einem weiteren zweiten gesteuerten Schaltelement SL 2 und einem ohmschen Widerstandselement R3 vorgesehen. Ein dritter Zweig der Brückenschaltung verbindet den zweiten Anschluss des Ausgangs mit dem Massepotential des Eingangs. Der vierte Zweig weist eine Parallelschaltung aus einem der ersten gesteuerten Schaltelemente SH2 und einem ohmschen Widerstandselement R2 auf.

Sowohl die ersten gesteuerten Schaltelemente SH1, SH2 als auch die zweiten gesteuerten Schaltelemente SL1, SL2 werden durch die in der Figur 3 nicht dargestellten Steuermittel angesteuert. Die Ansteuerung der ersten gesteuerten Schaltelemente SH1, SH2 und der zweiten gesteuerten Schaltelemente SL1 und SL2 erfolgt im Wechsel. Während eines Pulses sind die ersten gesteuerten Schaltelemente SH1, SH2 geschlossen, während in den Pausen zwischen den Pulsen die zweiten gesteuerten Schaltelemente SL1, SL2 geschlossen sind.

Während eines Pulses fließt daher ein Strom von der geregelten Stromquelle Q über den ersten Zweig mit dem geschlossenen ersten gesteuerten Schaltelement SH1 zum ersten Anschluss des Ausgangs. Der Strom fließt weiter durch die an den ersten Ausgang angeschlossene organische Leuchtdiode D zum zweiten Anschluss des Ausgangs und von dort über den vierten Zweig zum Massepotential des Eingangs. Im vierten Zweig wählt der Strom seinen Weg über das geschlossene erste Schaltelement SH2, welcher das ohmsche Widerstandselement R2 kurzschließt.

Während der Pause zwischen zwei Pulsen fließt dagegen ein Strom von der geregelten Stromquelle Q über den zweiten Zweig mit dem geschlossenen zweiten gesteuerten Schaltelement SL1 und das ohmsche Widerstandselement R1 und über den vierten Zweig mit dem ohmschen Widerstandselement R2 zum Massepotential des Eingangs. Die ohmschen Widerstandselemente R1, R2 im zweiten und vierten Zweig der Brückenschaltung bilden einen Spannungsteiler, der am zweiten Anschluss des Ausgangs eine Spannung einstellt. Da das zweite Schaltelement SL2 ebenfalls geschlossen ist, fällt über den Ausgang und den dritten Zweig der Brückenschaltung die am zweiten Anschluss des Ausgangs eingestellte Spannung ab. Diese Spannung entspricht der über das ohmsche Widerstandselements R2 abfallenden Spannung. Die Spannung fällt in Sperrrichtung der organischen Leuchtdiode D ab, so dass sie keinen Strom durch die organische Leuchtdiode treibt. Lediglich die Kapazität der organischen Leuchtdiode führt zu einem kurzfristigen Stromfluss in die Leuchtdiode zum Laden der Kapazität. Die negative Spannung in Flussrichtung der organischen Leuchtdiode D sorgt dafür, dass die sichtbaren Störungen des Erscheinungsbildes der organischen Leuchtdiode aufgrund der ionischen Verunreinigungen unterdrückt werden.

Das vierte Ausführungsbeispiel hat große Ähnlichkeit mit dem dritten Ausführungsbeispiel. So weist das vierte Ausführungsbeispiel wie das dritte Ausführungsbeispiel eine Brückenschaltung auf, welche es ermöglicht, in den Pausen eine negative Spannung am Ausgang anzulegen, die für die Unterdrückung der sichtbaren Störungen des Erscheinungsbildes der organischen Leuchtdiode aufgrund der ionischen Verunreinigungen sorgt. Zusätzlich weist das vierte Ausführungsbeispiel ein RC-Glied auf, dessen Kondensator C_{boost} in den Pausen aufgeladen wird und zum Beginn eines Pulses einen zusätzlichen Strom durch die organische Leuchtdiode D erzeugt, dadurch dass er zum Beginn des Pulses über die organische Leuchtdiode D entladen wird. Das RC-Glied ist folgendermaßen in dem dritten Ausführungsbeispiel angeordnet:
Das RC-Glied, bestehend aus einer Reihenschaltung des Kondensators C_{Boost} mit einem ohmschen Widerstandselement R_{Boost}, ist einerseits mit dem Massepotential des Eingangs verbunden.

Andererseits ist das RC-Glied zum einen über eine erste Diode D₁ mit einem Knoten zwischen dem zweiten gesteuerten Schaltelement SL1 und dem ohmschen Widerstandselement R₁ verbunden. Die erste Diode D₁ ist von dem Knoten zum RC-Glied in Flussrichtung geschaltet. Sofern das zweite gesteuerte Schaltelement SL1 geschlossen ist, fließt ein Strom von der gesteuerten Stromquelle Q über die Verbindung von dem Knoten zum RC-Glied, um den Kondensator C_{Boost} aufzuladen. Die Verbindung von dem Knoten zum RC-Glied umfassend die erste Diode D₁ wird daher Aufladezweig genannt.

Andererseits ist das RC-Glied zum anderen auch über eine zweite Diode D₂ mit der geregelten Stromquelle Q verbunden. Von der Stromquelle Q liegt die zweite Diode D₂ in Sperrrichtung zum RC-Glied. Zum Beginn eines Pulses kann das RC-Glied entladen werden. Der Strom fließt dazu aus dem Kondensator C_{Boost} über die zweite Diode D₂, das geschlossene erste gesteuerte Schaltelement SH1, den Ausgang mit der organischen Leuchtdiode D und das geschlossene erste gesteuerte Schaltelement SH2 zum Massepotential des Eingangs. Der Entladestrom des RC-Gliedes bewirkt einen höheren Stromfluss durch die organische Leuchtdiode D zum Beginn des Pulses. Der höhere Stromfluss durch die organische Leuchtdiode D zum Beginn des Pulses wirkt einer Rotverfärbung des von der organischen Leuchtdiode abgestrahlten Lichtes aufgrund der hohen Kapazität der organischen Leuchtdiode D entgegen.

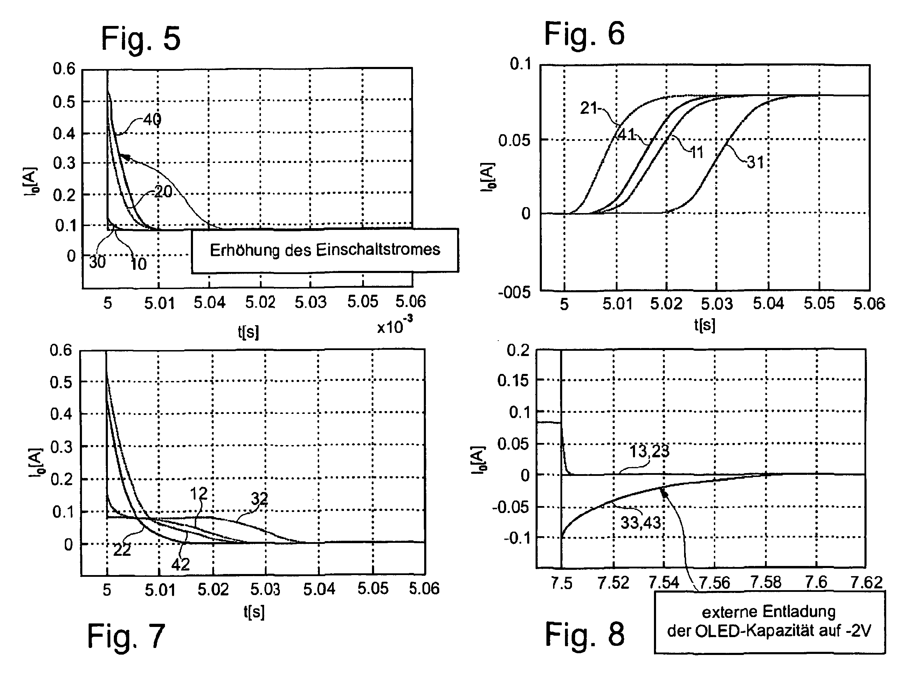

Figur 5 zeigt die Stromverläufe während des Einschaltens, das heißt zum Beginn eines Pulses, für die vier verschiedenen Ausführungsbeispiele gemäß der Figuren 1 bis 4. Dargestellt ist der gesamte, durch den Ausgang fließende Strom. Mit dem Bezugszeichen 10 ist der Stromverlauf beim ersten Ausführungsbeispiel gekennzeichnet. Der fließende Strom wird durch die geregelte Stromquelle Q zur Verfügung gestellt. Diese liefert während des Pulses einen konstanten Strom.

Das Bezugszeichen 20 kennzeichnet den Stromverlauf des zweiten Ausführungsbeispiels. Zum Beginn des Pulses kommt zu dem von der geregelten Stromquelle Q zur Verfügung gestellten Strom der Entladestrom des RC-Gliedes hinzu.

Beim dritten Ausführungsbeispiel wurde während der Pause der Ersatzkondensator C_{E,} d. h. die Kapazität der organischen Leuchtdiode durch die negative Spannung am Ausgang aufgeladen. Zum Beginn des Pulses wird der Ersatzkondensator C_{E} entladen, was zu einem höheren Strom durch den Ausgang führt. Da der Ersatzkondensator C_{E} zum Beginn des Pulses umgeladen wird, führt dies nicht zu einem konstanten Stromfluss durch die Ersatzdiode D_{E} (siehe Figur 6 und 7). Der von der geregelten Stromquelle Q zum Beginn des Pulses gelieferte, konstante Strom wird vielmehr dazu genutzt, um den Ersatzkondensator C_{E} umzuladen. Der konstante Strom durch die Ersatzdiode D_{E} wird daher deutlich später erreicht als beim ersten oder zweiten Ausführungsbeispiel (siehe Figur 6).

Bei geeigneter Dimensionierung der Kombination aus dem RC-Glied und der Brückenschaltung, wie sie beim vierten Ausführungsbeispiel gewählt wurde, kann ein schnellerer Anstieg des Stromes durch den Ersatzkondensator C_{E} erreicht werden als beim dritten Ausführungsbeispiel. Das RC-Glied lieferte den notwendigen Strom, um den Ersatzkondensator C_{E} umzuladen. Der Strom durch den Ausgang beim vierten Ausführungsbeispiel ist in der Figur 5 mit dem Bezugszeichen 40 gekennzeichnet.

Die Figuren 6 bzw. 7 zeigen die Ströme durch die Ersatzdiode D_{E} bzw. den Ersatzkondensator C_{E} zum Beginn des Pulses, wobei der Strom durch die Ersatzdiode D_{E} für das erste Ausführungsbeispiel mit 11, das zweite Ausführungsbeispiel mit 21, das dritte Ausführungsbeispiel mit 31 und das vierte Ausführungsbeispiel mit 41 bezeichnet ist. Der Strom durch den Ersatzkondensator C_{E} ist für das erste Ausführungsbeispiel mit 12, das zweite Ausführungsbeispiel mit 22, das dritte Ausführungsbeispiel mit 32 und das vierte Ausführungsbeispiel mit 42 bezeichnet.

Die Figur 8 zeigt den Strom durch den Ausgang zum Beginn einer Pause. Während die Ströme für das erste Ausführungsbeispiel und das zweite Ausführungsbeispiel (Bezugszeichen 13, 23) fast schlagartig auf Null zurückgehen, kommt es beim dritten und vierten Ausführungsbeispiel zu einem negativen Stromfluss durch den Ausgang (Bezugszeichen 33, 43). Dieser ist bedingt durch die negative Spannung am Ausgang, die zu einer erneuten Umladung des Ersatzkondensators C_{E} bzw. der Kapazität der organischen Leuchtdiode D führt.

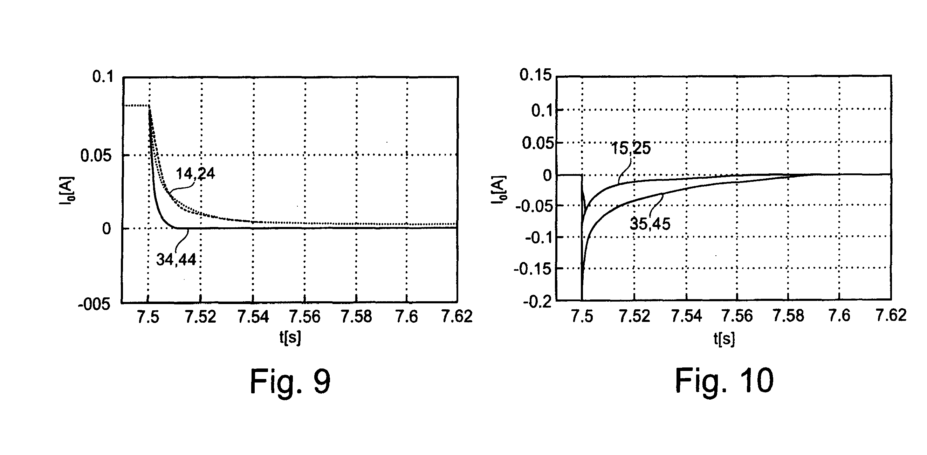

Dieses ist auch in den Figuren 9 und 10 zu erkennen, die die Ströme zum Beginn der Pause durch die Ersatzdiode D_{E} bzw. in den Ersatzkondensator C_{E} darstellen. In der Figur 9 ist der Strom durch die Ersatzdiode D_{E} für das erste Ausführungsbeispiel mit 14, das zweite Ausführungsbeispiel mit 24, das dritte Ausführungsbeispiel mit 34 und das vierte Ausführungsbeispiel mit 44 bezeichnet. In der Figur 10 ist der Strom durch den Ersatzkondensator C_{E} für das erste Ausführungsbeispiel mit 15, das zweite Ausführungsbeispiel mit 25, das dritte Ausführungsbeispiel mit 35, und das vierte Ausführungsbeispiel mit 45 bezeichnet.

### Bezugszeichenliste

- Q: geregelte Stromquelle
- H: Helligkeitssteuerung
- S: Steuerungsmittel
- SH1, SH2: erste gesteuerte Schaltelemente
- SL1, SL2: zweite gesteuerte Schaltelemente
- D: organische Leuchtdiode
- D_{E}: Ersatzleuchtdiode
- C_{E}: Ersatzkapazität
- R_{E}: Ersatzwiderstand
- D₁: erste Diode
- D₂: zweite Diode
- R₁ bis R₃: ohmsche Widerstandselemente
- R_{Boost}: ohmsches Widerstandselement des RC-Gliedes
- C_{Boost}: Kondensator des RC-Gliedes
- R_{SNS}: ohmsches Widerstandselement

- I: Strom durch die organische Leuchtdiode
- I_{D}: Strom durch die Ersatzdiode
- I_{C}: Strom durch die Ersatzkapazität
- U₀: Eingangsspannung
- U_{OLED}: Ausgangsspannung
- U_{R1}: Spannung im zweiten Zweig der Brückenschaltung
- U_{R2}: Spannung im vierten Zweig der Brückenschaltung

## Patentansprüche

1. Schaltungsanordnung zur Ansteuerung von organischen Leuchtdioden (D) mit folgenden Merkmalen:
- die Anordnung weist einen Eingang zum Anschluss an ein Gleichspannungsnetz auf,
- die Anordnung weist einen Ausgang zum Anschluss der organischen Leuchtdioden (D) auf,
- die Anordnung weist eine geregelte Stromquelle (Q) auf, welche im Betrieb der Schaltungsanordnung den durch den Ausgang fließenden Strom (I) erzeugt,
- die Anordnung weist zumindest zwei erste gesteuerte Schaltelemente (SH1, SH2) zum Ein- und Ausschalten des Stromes (I) durch den Ausgang auf, mit welchem der mittlere, durch den Ausgang fließende Strom (I) einstellbar ist.
- die Anordnung weist eine Brückenschaltung auf, wobei der Ausgang in einem Brückenzweig der Brückenschaltung liegt,
- die Anordnung weist zweite gesteuerte Schaltelemente (SL1, SL2) zum Ein- und Ausschalten einer in Sperrrichtung an der organischen Leuchtdiode anliegenden (D) Spannung auf,
- die Schaltungsanordnung weist ein Steuerungsmittel (S) zum Steuern des Ein- und Ausschaltens der ersten gesteuerten Schaltelemente (SH1, SH2) und der zweiten gesteuerten Schaltelemente (SL1, SL2) auf, das geeignet und eingerichtet ist die ersten gesteuerten (SH1, SH2) Schaltelemente und die zweiten gesteuerten Schaltelemente (SL1, SL2) im Wechsel zu schalten,
**dadurch gekennzeichnet,**
- **dass** durch das von dem Steuerungsmittel steuerbare Ein- und Ausschalten der ersten und der zweiten gesteuerten Schaltelemente (SH1, SH2, SL1, SL2) die mittlere Stromstärke des Stroms durch den Ausgang durch Pulsweitenmodulation vorgebbar ist und
- **dass** die Anordnung ein RC-Glied (R_{Boost}, C_{Boost}) aufweist, welches geeignet und eingerichtet ist, bei geöffneten ersten gesteuerten Schaltelementen (SH1, SH2) von der Stromquelle (Q) aufgeladen zu werden, und welches geeignet und eingerichtet ist, bei geschlossenen ersten gesteuerten Schaltelementen (SH1, SH2) über den Ausgang entladen zu werden.

2. Schaltungsanordnung nach Anspruch 1, **dadurch gekennzeichnet, dass** ein erster Zweig der Brückenschaltung eines der ersten gesteuerten Schaltelemente (SH1) aufweist und einen ersten Anschluss des Ausganges mit der geregelten Stromquelle (Q) verbindet.

3. Schaltungsanordnung nach Anspruch 1 oder 2, **dadurch gekennzeichnet, dass** ein zweiter Zweig der Brückenschaltung eine Reihenschaltung eines der zweiten gesteuerten Schaltelemente (SL1) und eines ohmschen Widerstandselements (R₁) aufweist und einen zweiten Anschluss des Ausganges mit der geregelten Stromquelle (Q) verbindet.

4. Schaltungsanordnung nach einem der Ansprüche 1 bis 3, **dadurch gekennzeichnet, dass** ein dritter Zweig der Brückenschaltung eine Reihenschaltung eines der zweiten gesteuerten Schaltelemente (SL2) und eines ohmschen Widerstandselements (R₃) aufweist und den ersten Anschluss des Ausganges mit einem Massepotential verbindet.

5. Schaltungsanordnung nach einem der Ansprüche 1 bis 4, **dadurch gekennzeichnet, dass** ein vierter Zweig der Brückenschaltung eine Parallelschaltung eines der ersten gesteuerten Schaltelemente (SH2) und eines ohmschen Widerstandselements (R₃) aufweist und den zweiten Anschluss des Ausganges mit einem Massepotential verbindet.

6. Schaltungsanordnung nach einem der Ansprüche 1 bis 5, **dadurch gekennzeichnet, dass** die Schaltungsanordnung einen Aufladezweig aufweist, der das RC-Glied (R_{Boost}, C_{Boost}) mit der geregelten Stromquelle (Q) verbindet und ein zweites gesteuertes Schaltelement (SL1) und eine erste Diode (D₁) aufweist, wobei die erste Diode (D₁) von der geregelten Stromquelle (Q) über das RC-Glied (R_{Boost}, C_{Boost}) zum Massepotential in Flussrichtung geschaltet ist.

7. Schaltungsanordnung nach einem der Ansprüche 3 bis 6, **dadurch gekennzeichnet, dass** der Aufladezweig zumindest in einem Abschnitt mit dem zweiten gesteuerten Schaltelement (SL1) mit dem zweiten Zweig der Brückenschaltung zusammenfällt.

8. Schaltungsanordnung nach einem der Ansprüche 2 bis 7, **dadurch gekennzeichnet, dass** die Schaltungsanordnung einen Entladezweig aufweist, der das RC-Glied (R_{Boost}, C_{Boost}) mit einem Knoten zwischen der geregelten Stromquelle (Q) und dem ersten Zweig der Brückenschaltung verbindet und eine zweite Diode (D₂) aufweist, wobei die zweite Diode (D₂) vom RC-Glied (R_{Boost}, C_{Boost}) zur Verbindung von der geregelten Stromquelle (Q) zum ersten Zweig der Brückenschaltung in Flussrichtung geschaltet ist.

## Claims

1. Switching arrangement for managing organic light diodes (D) with the following characteristics:
- the arrangement has an entry point to connect to a direct voltage network,
- the arrangement has an exit point to connect to the organic light diodes (D),
- the arrangement has an adjusted current source (Q), which creates a flowing current at the exit point during the operation of the switching arrangement (I),
- the arrangement has at least two first managed connection elements (SH1, SH2) for turning the current (I) on and off at the exit point, with which the middle current flowing at the exit is adjustable,
- the arrangement has a bridge connection in which the exit point lies in a bridge branch of the bridge connection,
- the arrangement has second managing connection elements (SL1,
SL2) for turning on and turning off voltage lying in a backward direction to the organic light diodes (D),
- the connection arrangement has a management means (S) to manage the turning on and turning off of the first managed connection elements (SH1, SH2) and the second managed connection elements (SL1, SL2) and is able and is so oriented to alternately switch on the first managed switch elements (SH1, SH2) and the second switch elements ( SL1, SL2),
so **characterized in that**
- the medium current strength of the current is usable with pulse breadth modulation by means of the switching on and switching off of the first and second switching elements (SH1, SH2, SL1, SL2) that are regulated by the control means, and
- the arrangement has an RC element (R_{Boost}, C_{Boost}), which is able and is so oriented to be charged from the current source (Q) at the opened first managed switching elements (SH1, SH2), and is able and so oriented to be discharged at the closed first managed switch elements (SH1, SH2) at the exit point.

2. Switching arrangement according to claim 1, so **characterized in that** a first branch of the bridge switch has one of the first managed switch elements (SH1) and connects a first connection of the exit point with the adjusted current source (Q).

3. Switching arrangement according to claim 1 or 2, so **characterized in that** a second branch of the bridge connection has a serial connection of one of the second managed switch elements (SL1) and an ohm resistance element (R₁) and connects a second connection of the exit point with the adjusted current source (Q).

4. Switching arrangement according to one of claims 1 to 3, **so characterized in that** a third branch of the bridge connection has a serial connection of one of the second managed switch elements (SL2) and an ohm resistance element (R₃) and connects the first connection of the exit point with an earth potential.

5. Switching arrangement according to one of claims 1 to 4, so **characterized in that** a fourth branch of the bridge connection has a serial connection of one of the first managed switch elements (SH2) and an ohm resistance element (R₃) and connects the second connection of the exit point with an earth potential.

6. Switching arrangement according to one of claims 1 to 5, so **characterized in that** the switch arrangement has a charge branch, which connects the RC element (R_{Boost}, C_{Boost}) with the adjusted current source (Q) and has a second managed switch element (SL1) and a first diode (D₁), in which the first diode (D₁) is connected in the direction of the flow to the earth potential by the RC element (R_{Boost}, C_{Boost}).

7. Switch arrangement according to one of claims 3 to 6, so **characterized in that** the charge branch in at least one section with the second managed switch element (SL1) coincides with the second branch of the bridge switch.

8. Switching arrangement according to one of claims 2 to 7, so **characterized in that** the switch arrangement has a discharge branch, which connects the RC element (R_{Boost}, C_{Boost}) with a joint between the adjusted current source (Q) and the first branch of the bridge connection and a second diode (D₂), in which the second diode (D₂) of the RC-element (R_{Boost}, C_{Boost}) is switched on for connection of the adjusted current source (Q) to the first branch of the bridge connection in the direction of the flow.

## Revendications

1. Agencement de commutation pour la commande de diodes électroluminescentes organiques (D) avec les caractéristiques suivantes :
- l'agencement présente une entrée pour la connexion à un réseau à tension continue,
- l'agencement présente une sortie pour la connexion des diodes électroluminescentes organiques (D),
- l'agencement présente une source de courant contrôlée (Q) qui produit le courant (I) passant par la sortie lorsque l'agencement de commutation est en fonction,
- l'agencement présente au moins deux premiers éléments de commutation commandés (SH1, SH2) pour la mise en circuit et hors circuit du courant (I) par la sortie avec laquelle le courant (I) moyen passant par la sortie peut être réglé,
- l'agencement présente une connexion à pont, la sortie se trouvant sur une branche de pont de la connexion à pont,
- l'agencement présente des deuxièmes éléments de commutation commandés (SL1, SL2) pour la mise en circuit et hors circuit d'une tension à la diode électroluminescente organique (D) en direction inverse,
- l'agencement présente un moyen de commande (S) pour commander la mise en circuit et hors circuit des premiers éléments de commutation commandés (SH1, SH2) et des deuxièmes éléments de commutation commandés (SL1, SL2) qui est approprié et configuré de commuter en alternance les premiers éléments de commutation commandés (SH1, SH2) et les deuxièmes éléments de commutation commandés (SL1, SL2),
**caractérisé en ce que**
- par la mise en circuit et hors circuit des premiers et des deuxièmes éléments de commutation commandés (SH1, SH2, SL1, SL2) commandée par le moyen de commande l'intensité moyenne du courant par la sortie peut être prédéterminée par la modulation de largeur d'impulsions,
- l'agencement présente un RC (R_{Boost}, C_{Boost}) qui est approprié et configuré d'être chargé par la source de courant (Q) lorsque les premiers éléments de commutation commandés (SH1, SH2) sont ouverts et qui est approprié et configuré d'être déchargé par la sortie lorsque les premiers éléments de commutation commandés (SH1, SH2) sont fermés.

2. L'agencement de commutation selon la revendication 1, **caractérisé en ce qu'**une première branche de pont de la connexion à pont présente un des premiers éléments de commutation commandés (SH1) et qui relie une première borne de la sortie avec la source de courant contrôlée (Q).

3. L'agencement de commutation selon la revendication 1 ou 2, **caractérisé en ce qu'**une deuxième branche de pont de la connexion à pont présente un branchement en série d'un des deuxièmes éléments de commutation commandés (SL1) et d'un élément de résistance idéale (R₁) et relie une deuxième borne de la sortie avec la source de courant contrôlée (Q).

4. L'agencement de commutation selon l'une des revendications 1 à 3, **caractérisé en ce qu'**une troisième branche de pont de la connexion à pont présente un branchement en série d'un des deuxièmes éléments de commutation commandés (SL2) et d'un élément de résistance idéale (R₃) et relie la première borne de la sortie avec un potentiel de masse.

5. L'agencement de commutation selon l'une des revendications 1 à 4, **caractérisé en ce qu'**une quatrième branche de pont de la connexion à pont présente un branchement en parallèle d'un des premiers éléments de commutation commandés (SH2) et d'un élément de résistance idéale (R₃) et relie la deuxième borne de la sortie avec un potentiel de masse.

6. L'agencement de commutation selon l'une des revendications 1 à 5, **caractérisé en ce que** l'agencement de commutation présente une branche de chargement qui relie le RC (R_{Boost}, C_{Boost}) avec la source de courant contrôlée (Q) et qui présente un deuxième élément de commutation commandé (SL1) et une première diode (D₁), la première diode (D₁) étant commutée en sens direct de la source de courant contrôlée (Q) à travers le RC (R_{Boost}, C_{Boost}) au potentiel de masse.

7. L'agencement de commutation selon l'une des revendications 3 à 6, **caractérisé en ce que** la branche de chargement coïncide au moins dans une partie avec le deuxième élément de commutation commandé (SL1) avec la deuxième branche de la connexion à pont.

8. L'agencement de commutation selon l'une des revendications 2 à 7, **caractérisé en ce que** l'agencement de commutation présente une branche de déchargement qui relie le RC (R_{Boost}, C_{Boost}) avec un noeud entre la source de courant contrôlée (Q) et la première branche de la connexion à pont et qui présente une deuxième diode (D₂), la deuxième diode (D₂) étant commutée en sens direct du RC (R_{Boost}, C_{Boost}) pour la connexion de la source de courant contrôlée (Q) à la première branche de la connexion à pont.
